# EUROPÄISCHE PATENTSCHRIFT

(11) **EP 0 592 955 B1**
(45) Veröffentlichungstag und Bekanntmachung des Hinweises auf die Patenterteilung: **20.12.2000**
(21) Anmeldenummer: 93116283.8
(22) Anmeldetag: 08.10.1993
(51) Int. Cl.: C09B 67/50, C09B 67/16, C09B 47/30

(54) **Metallfreies Phthalocyanin der gamma-Modifikation**
Gamma modification of a metal free phthalocyanine
Phtalocyanine non métallisée de la modification gamma

(30) Priorität: 16.10.1992 DE 4234922
(43) Veröffentlichungstag der Anmeldung: 20.04.1994
(73) Patentinhaber: BASF Aktiengesellschaft, 67063 Ludwigshafen (DE)
(72) Erfinder: Boettcher, Peter, Dr., D-6704 Mutterstadt (DE); Erk, Peter, Dr., D-6710 Frankenthal (DE); Jesse, Joachim, Dr., D-6714 Weisenheim (DE)

(56) Entgegenhaltungen:
- EP-A- 0 093 331
- EP-A- 0 269 079
- FR-A- 1 447 277
- GB-A- 1 169 901
- PATENT ABSTRACTS OF JAPAN vol. 009 no. 228 (C-303) ,13.September 1985 & JP-A-60 087288 (TOYO INK SEIZO KK;OTHERS: 01) 16.Mai 1985,
- PATENT ABSTRACTS OF JAPAN vol. 007 no. 007 (C-144) ,12.Januar 1983 & JP-A-57 164158 (TOYO INK SEIZO KK) 8.Oktober 1982,

## Beschreibung

Die vorliegende Erfindung betrifft metallfreies Phthalocyanin der γ-Modifikation, gekennzeichnet durch das Röntgenpulverdiagramm (Cu_{Kα}) mit den wesentlichen Glanzwinkeln 2 Theta [°] 6.8, 7.4, 13.6, 14.9, 15.9, 16.9, 20.5, 22.4, 24.7, 26.2 und 27.8, gegebenenfalls im Gemisch mit anderen Modifikationen, wobei in den Gemischen die Glanzwinkel um ± 0.2° verschoben sein können.

Metallfreies Phthalocyanin bildet verschiedene Kristallstrukturen aus (F.H. Moser, A.L. Thomas, "The Phthalocyanines", CRC Press Inc., 1983). In der Literatur werden die Modifikationen α, β und x (US-A-3 357 989; DE-A-22 18 788; F.H. Moser, A.L. Thomas, "The Phthalocyanines", CRC Press Inc., 1983) und τ (EP-A-93 331; JP-A 87288/1985; S. Takano, T. Enokida, A. Kakuta und Y. Mori, Chemistry Lett. 1984, 2037-40) beschrieben. Die beim Cu-Phthalocyanin bekannte γ-Modifikation wurde für das metallfreie Phthalocyanin bisher nicht beschrieben. Es finden sich zwar in der Literatur (F.H. Moser, A.L. Thomas, "The Phthalocyanines", CRC Press Inc., 1983, Volume I, S. 23) Angaben über eine γ-Modifikation, jedoch konnten diese nicht verifiziert werden; vielmehr wurde angegeben, daß eine α-Modifikation vorgelegen habe (F.H. Moser, A.L. Thomas, "The Phthalocyanines", CRC Press Inc., 1983, Volume I, S. 23; EP-A-93 331).

Der Erfindung lag die Aufgabe zugrunde, weitere Phthalocyanin-pigmente bereitzustellen, die keine Schwermetalle enthalten und interessante koloristische Eigenschaften aufweisen.

Demgemäß wurde metallfreies Phthalocyanin der γ-Modifikation gefunden, welches gekennzeichnet ist durch ein Röntgenpulverdiagramm (Cu_{Kα}) mit den wesentlichen Glanzwinkeln 2 Theta [°] 6.8, 7.4, 13.6, 14.9, 15.9, 16.9, 20.5, 22.4, 24.7, 26.2 und 27.8, gegebenenfalls im Gemisch mit anderen Modifikationen, wobei in den Gemischen die Glanzwinkel um ± 0.2° verschoben sein können.

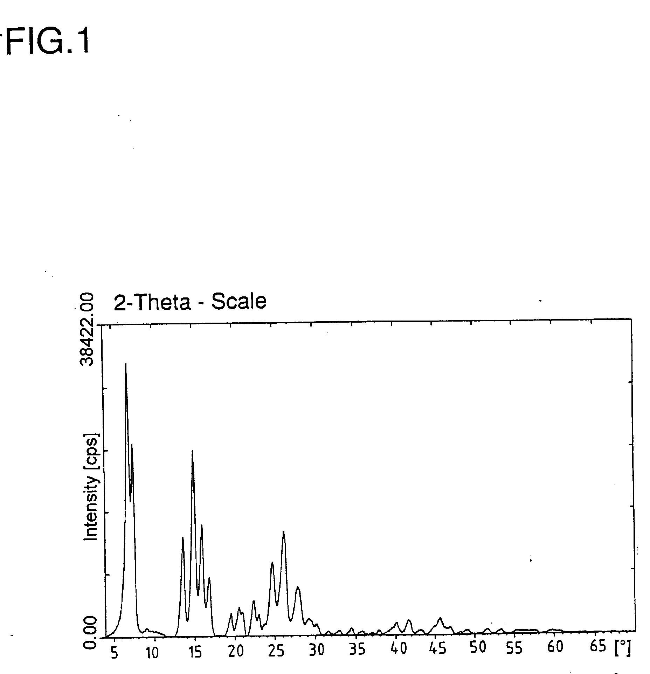

Das Röntgenpulverdiagramm der γ-Modifikation ist in Fig. 1 abgebildet. Die Abszisse bedeutet dabei den Glanzwinkel 2 Theta in Grad [°], auf der Ordinate ist die Intensität in counts per second [cps] aufgetragen.

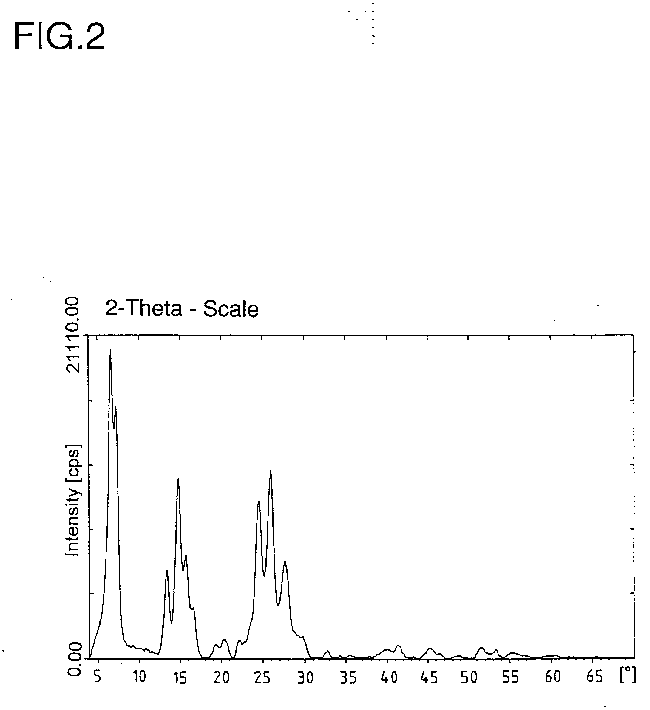

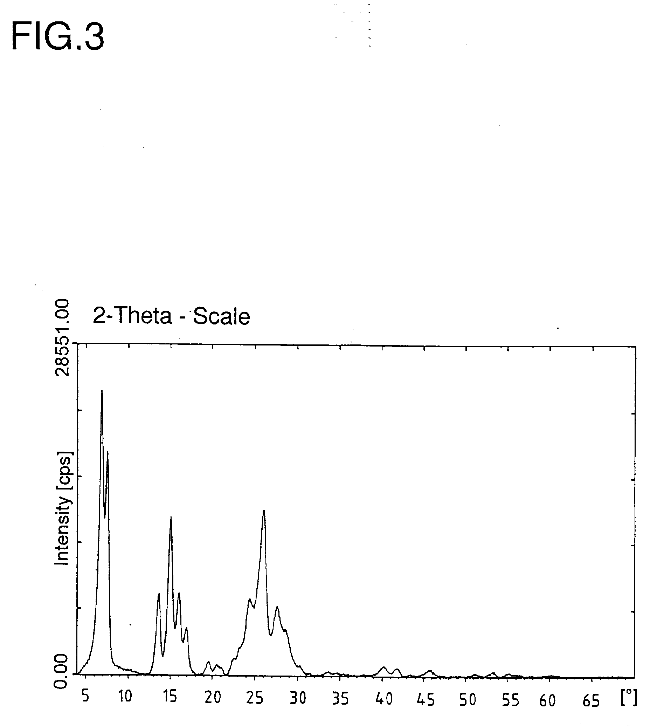

Die Glanzwinkel wurden nach der Methode von Debye-Scherrer gemessen. Zur Messung wurde ein Röntgendiffraktometer D 5 000 der Firma Siemens verwendet. Die koloristisch wertvollsten Pigmente sind diejenigen, bei denen die γ-Modifikation im Gemisch mit anderen Modifikationen vorliegt. Rotstichige Pigmente enthalten dabei 35 bis 100 %, vorzugsweise 40 - 80 %, der γ-Modifikation (Röntgenpulverdiagramm in Fig. 2), wohingegen der Gehalt an der γ-Modifikation bei den grünstichigen Varianten zwischen 10 und 30 % liegt (Röntgenpulverdiagramm in Fig. 3).

Zur Herstellung der neuen reinen γ-Modifikation kann man metallfreies Phthalocyanin beliebiger Modifikation in Schwefelsäure-Monohydrat auflösen und durch Eingießen in Dimethylformamid ausfällen.

Rotstichige Pigmente erhält man z.B. durch Eintragen von metallfreiem Phthalocyanin mit einem Gehalt an β-Modifikation von < 25 %, vorzugsweise < 10 %, in 40 bis 75, vorzugsweise 55 bis 70 gew.-%ige Schwefelsäure bei Temperaturen von 10 bis 40°C, vorzugsweise 20 bis 30°C. Nach einer Behandlungszeit von ungefähr 2 bis 50 Stunden, in der Regel 15 bis 30 Stunden und anschließendem Eingießen der Schwefelsäure-Pigment-Paste in Wasser, ist die Umwandlung in ein erfindungsgemäßes Gemisch beendet.

Grünstichige Pigmente erhält man auf die gleiche Weise ausgehend von metallfreiem Phthalocyanin mit Gehalten an β-Modifikation von ≥ 25 %.

Die erfindungsgemäßen Pigmente haben koloristische Eigenschaften, die denjenigen von schwermetallhaltigen Phthalocyaninen nahekommen. Sie eignen sich ohne weitere Formierung vorzüglich als Farbkörper in Druckfarben und Kunststoffen, in Tonern und in Komponenten für die Elektrophotographie sowie, gegebenenfalls unter Zusatz von modifikationsstabilisierenden Additiven, in Lacken.

### Beispiele

### Allgemeines

Das in den Beispielen 3 - 26 eingesetzte metallfreie Phthalocyanin wurde jeweils in einer Kugelmühle zerkleinert, bevor es der Behandlung mit Schwefelsäure unterworfen wurde.

Es folgen Beispiele, in denen die Herstellung der reinen γ-Modifikation des Pigmentes beschrieben wird:

### Beispiel 1

120 g metallfreies Phthalocyanin wurden bei Temperaturen < 10°C in 1200 g Schwefelsäure-Monohydrat eingetragen und solange gerührt, bis eine vollständige Lösung entstanden war. Diese wurde dann bei Temperaturen < 5°C in 5 Liter Dimethylformamid (DMF) eingegossen und weitere 12 Stunden bei Raumtemperatur gerührt. Danach wurde der Niederschlag abfiltriert, mit Methanol und Wasser gewaschen und im Vakuum bei 65°C getrocknet.

### Beispiel 2

Es wurde anlog Beispiel 1 vorgegangen, jedoch wurde 48 Stunden nachgerührt.

Pigmente gemäß Anspruch 4 wurden wie folgt hergestellt:

### Beispiel 3

In 4500 g 61,5 gew.-%ige Schwefelsäure wurden bei 20°C innerhalb von 10 Minuten 450 g metallfreies Phthalocyanin eingetragen, das 42 % der β-Modifikation enthielt. Die Mischung wurde auf 25°C erwärmt, 16 h bei dieser Temperatur gerührt, anschließend in 10 l Wasser von 80°C eingetragen und eine weitere Stunde gerührt. Das ausgefällte Pigment wurde abfiltriert, mit Wasser neutral gewaschen und bei 80°C im Vakuum getrocknet.

### Beispiel 4

Es wurde analog Beispiel 3 vorgegangen, jedoch wurde metallfreies Phthalocyanin eingesetzt, das 48 % der β-Modifikation enthielt.

### Beispiel 5

Es wurde analog Beispiel 3 vorgegangen, jedoch wurde metallfreies Phthalocyanin eingesetzt, das 66 % der β-Modifikation enthielt.

### Beispiel 6

Es wurde analog Beispiel 3 vorgegangen, jedoch wurde metallfreies Phthalocyanin eingesetzt, das 30 % der β-Modifikation enthielt.

### Beispiel 7

Es wurde analog Beispiel 3 vorgegangen, jedoch wurde metallfreies Phthalocyanin eingesetzt, das 75 % der β-Modifikation enthielt.

### Beispiel 8

Es wurde analaog Beispiel 3 vorgegangen, jedoch betrug die Verweilzeit in der Schwefelsäure 24 Stunden.

### Beispiel 9

Es wurde analog Beispiel 3 vorgegangen, jedoch wurde 62,5 gew.%ige Schwefelsäure verwendet, und die Verweilzeit des metallfreien Phthalocyanins in der Schwefelsäure betrug 24 Stunden.

### Beispiel 10

Es wurde analog Beispiel 3 vorgegangen, jedoch wurde 63,5 gew.-%ige Schwefelsäure verwendet, und die Verweilzeit des metallfreien Phthalocyanins in der Schwefelsäure betrug 24 Stunden.

### Beispiel 11

Es wurde analog Beispiel 3 vorgegangen, jedoch wurde 65 gew.-%ige Schwefelsäure verwendet, und die Verweilzeit des metallfreien Phthalocyanins in der Schwefelsäure betrug 24 Stunden.

### Beispiel 12

Es wurde analog Beispiel 3 vorgegangen, jedoch wurde 66 gew.-%ige Schwefelsäure verwendet, und die Verweilzeit des metallfreien Phthalocyanins in der Schwefelsäure betrug 16 Stunden.

Nach den Methoden der Beispiele 3 bis 12 wurden Produkte erhalten, die dem Röntgendiffraktogramm der Figur 3 entsprachen und die einen grünstichigen Farbton aufwiesen.

### Beispiel 13

Es wurde analog Beispiel 3 vorgegangen, jedoch wurde 64 gew.-%ige Schwefelsäure verwendet, und die Verweilzeit des metallfreien Phthalocyanins in der Schwefelsäure betrug 24 Stunden. Außerdem wurden dem Produkt 10 Gew.-% der in der DE-C-25 16 054 genannten Additive zugesetzt.

### Beispiel 14

Es wurde analog Beispiel 3 vorgegangen, jedoch wurde 68 gew.-%ige Schwefelsäure verwendet, und die Verweilzeit des metallfreien Phthalocyanins in der Schwefelsäure betrug 16 Stunden. Außerdem wurden dem Produkt 10 Gew.-% der in der DE-C-25 16 054 genannten Additive zugesetzt.

Die Produkte aus den Beispielen 13 und 14 eigneten sich für Lacke.

Pigmente gemäß Anspruch 3 wurden wie folgt hergestellt:

### Beispiel 15

In 445 g 60,5 gew.-%ige Schwefelsäure wurden bei 20°C 45 g metallfreies Phthalocyanin eingetragen, das 8 % der β-Modifikation enthielt. Nach 16stündigem Rühren bei 25°C wurde die Mischung in 1 Liter Wasser von 80°C eingegossen und eine weitere Stunde gerührt. Das ausgefällte Pigment wurde abfiltriert, mit Wasser neutral gewaschen und bei 80°C im Vakuum getrocknet.

### Beispiel 16

Es wurde analog Beispiel 15 vorgegangen, jedoch betrug die Verweilzeit des metallfreien Phthalocyanins in der Schwefelsäure 24 Stunden.

### Beispiel 17

Es wurde analog Beispiel 15 vorgegangen, jedoch wurde metallfreies Phthalocyanin verwendet, das 0 % der β-Modifikation enthielt.

### Beispiel 18

Es wurde analog Beispiel 15 vorgegangen, jedoch wurden 61,5 gew.-%ige Schwefelsäure und metallfreies Phthalocyanin, das 0 % der β-Modifikation enthielt, verwendet, und die Verweilzeit in der Schwefelsäure betrug 24 Stunden.

### Beispiel 19

Es wurde analog Beispiel 15 vorgegangen, jedoch wurden 61,5 gew.-%ige Schwefelsäure und metallfreies Phthalocyanin, das 0 % der β-Modifikation enthielt, verwendet, und die Verweilzeit in der Schwefelsäure betrug 16 Stunden.

### Beispiel 20

Es wurde analog Beispiel 15 vorgegangen, jedoch wurden 62,5 gew.-%ige Schwefelsäure und metallfreies Phthalocyanin, das 0 % der β-Modifikation enthielt, verwendet, und die Verweilzeit in der Schwefelsäure betrug 24 Stunden.

### Beispiel 21

Es wurde analog Beispiel 15 vorgegangen, jedoch wurden 63,5 gew.-%ige Schwefelsäure und metallfreies Phthalocyanin, das 0 % der β-Modifikation enthielt, verwendet, und die Verweilzeit in der Schwefelsäure betrug 24 Stunden.

### Beispiel 22

Es wurde analog Beispiel 15 vorgegangen, jedoch wurden 64 gew.-%ige Schwefelsäure und metallfreies Phthalocyanin, das 0 % der β-Modifikation enthielt, verwendet, und die Verweilzeit in der Schwefelsäure betrug 24 Stunden.

### Beispiel 23

Es wurde analog Beispiel 15 vorgegangen, jedoch wurden 65 gew.-%ige Schwefelsäure und metallfreies Phthalocyanin, das 0 % der β-Modifikation enthielt, verwendet, und die Verweilzeit in der Schwefelsäure betrug 24 Stunden.

### Beispiel 24

Es wurde analog Beispiel 15 vorgegangen, jedoch wurden 65 gew.-%ige Schwefelsäure und metallfreies Phthalocyanin, das 0 % der β-Modifikation enthielt, verwendet, und die Verweilzeit in der Schwefelsäure betrug 16 Stunden.

### Beispiel 25

Es wurde analog Beispiel 15 vorgegangen, jedoch wurden 66 gew.-%ige Schwefelsäure und metallfreies Phthalocyanin, das 0 % der β-Modifikation enthielt, verwendet, und die Verweilzeit in der Schwefelsäure betrug 24 Stunden.

Die gemäß den Beispielen 15 bis 25 erhaltenen Produkte hatten ein Röntgendiffraktogramm gemäß Figur 2 und rotstichige Farbtöne.

### Beispiel 26

Es wurde analog Beispiel 22 vorgegangen. Dem Produkt wurden 10 Gew.-% der in der DE-C-25 16 054 genannten Additive zugesetzt, so daß ein in Lacken stabiles Pigment erhalten wurde.

## Patentansprüche

1. Metallfreies Phthalocyanin der γ-Modifikation, gekennzeichnet durch das Röntgenpulverdiagramm (Cu_{Kα}) mit den wesentlichen Glanzwinkeln 2 Theta [°] 6.8, 7.4, 13.6, 14.9, 15.9, 16.9, 20.5, 22.4, 24.7, 26.2 und 27.8, gegebenenfalls im Gemisch mit anderen Modifikationen, wobei in den Gemischen die Glanzwinkel um ± 0.2° verschoben sein können.

2. Metallfreies Phthalocyanin nach Anspruch 1, enthaltend 35 bis 100 % der γ-Modifikation.

3. Metallfreies Phthalocyanin nach Anspruch 1, enthaltend 40 bis 80 % der γ-Modifikation.

4. Metallfreies Phthalocyanin nach Anspruch 1, enthaltend 10 bis 30 % der γ-Modifikation.

5. Verfahren zur Herstellung des reinen metallfreien Phthalocyanins der γ-Modifikation, dadurch gekennzeichnet, daß man metallfreies Phthalocyanin beliebiger Modifikation in Schwefelsäure-Monohydrat auflöst und in Dimethylformamid wieder ausfällt.

6. Verfahren zur Herstellung von metallfreiem Phthalocyanin gemäß Anspruch 3, dadurch gekennzeichnet, daß man metallfreies Phthalocyanin mit einem Gehalt an β-Modifikation < 25 %, vorzugsweise < 10 %, mit 40 - 75 gew.-%iger Schwefelsäure bei Temperaturen von 10 bis 40°C 2 - 50 h behandelt, dann die entsprechende Schwefelsäure-Pigment-Paste in Wasser einfließen läßt und das Pigment isoliert.

7. Verfahren zur Herstellung von metallfreiem Phthalocyanin gemäß Anspruch 4, dadurch gekennzeichnet, daß man metallfreies Phthalocyanin mit einem Gehalt an β-Modifikation ≥ 25 % mit 40 - 75 gew.-%iger Schwefelsäure bei Temperaturen von 10 bis 40°C 2 - 50 h behandelt, dann die entsprechende Schwefelsäure-Pigment-Paste in Wasser einfließen läßt und das Pigment isoliert.

## Claims

1. A metal-free phthalocyanine of the γ-form, characterized by the X-ray powder diagram (Cu_{Kα}) having the essential glancing angles 2 Theta [°] 6.8, 7.4, 13.6, 14.9, 15.9, 16.9, 20.5, 22.4, 24.7, 26.2 and 27.8, possibly in mixture with other crystal forms, in which case the glancing angles may be shifted by ± 0.2°.

2. A metal-free phthalocyanine as claimed in claim 1 comprising from 35 to 100% of the γ-form.

3. A metal-free phthalocyanine as claimed in claim 1 comprising from 40 to 80% of the γ-form.

4. A metal-free phthalocyanine as claimed in claim 1 comprising from 10 to 30% of the γ-form.

5. A process for preparing the pure metal-free phthalocyanine of the γ-form, which comprises dissolving metal-free phthalocyanine of any desired crystal form in sulfuric acid monohydrate and precipitating it out again in dimethylformamide.

6. A process for preparing metal-free phthalocyanine as claimed in claim 3, which comprises treating metal-free phthalocyanine containing < 25%, preferably < 10%, of the β-form with 40-75% strength by weight sulfuric acid at from 10 to 40°C for 2-50 h, then running the corresponding sulfuric acid-pigment paste into water, and isolating the pigment.

7. A process for preparing metal-free phthalocyanine as claimed in claim 4, which comprises treating metal-free phthalocyanine containing ≥ 25% of the β-form with 40-75% strength by weight sulfuric acid at from 10 to 40°C for 2-50 h, then running the corresponding sulfuric acid-pigment paste into water, and isolating the pigment.

## Revendications

1. Phtalocyanine de modification γ exempte de métal, caractérisée par le diagramme de poudre aux rayons X (Cu_{Kα}) présentant essentiellement les angles de brillance 2 Théta [°] 6,8, 7,4, 13,6, 14,9, 15,9, 16,9, 20,5, 22,4, 24,7, 26,2 et 27,8, éventuellement en mélange avec d'autres modifications, où les angles de brillance dans les mélanges peuvent être décalés de ± 0,2°.

2. Phtalocyanine exempte de métal selon la revendication 1, contenant 35 à 100% de modification γ.

3. Phtalocyanine exempte de métal selon la revendication 1, contenant 40 à 80% de modification γ.

4. Phtalocyanine exempte de métal selon la revendication 1, contenant 10 à 30% de modification γ.

5. Procédé de préparation de la phtalocyanine de modification γ pure exempte de métal, caractérisé en ce que l'on dissout dans de l'acide sulfurique monohydraté une phtalocyanine exempte de métal de modification quelconque, et on la fait ensuite précipiter dans du diméthylformamide.

6. Procédé de préparation de phtalocyanine exempte de métal selon la revendication 3, caractérisé en ce que l'on traite de la phtalocyanine exempte de métal ayant une teneur en modification β < 25%, de préférence < 10%, avec de l'acide sulfurique à 40-75% en poids, à des températures de 10-40°C pendant 2-50 heures, puis on laisse la pâte de pigment / acide sulfurique correspondante couler dans de l'eau et on isole le pigment.

7. Procédé de préparation de phtalocyanine exempte de métal selon la revendication 4, caractérisé en ce que l'on traite de la phtalocyanine exempte de métal ayant une teneur en modification β ≥ 25%, avec de l'acide sulfurique à 40-75% en poids, à des températures de 10-40°C pendant 2-50 heures, puis on laisse la pâte de pigment / acide sulfurique correspondante couler dans de l'eau et on isole le pigment.
